# EUROPEAN PATENT APPLICATION

(11) **EP 4 580 253 A1**
(43) Date of publication of application: **02.07.2025**
(21) Application number: 23873230.9
(22) Date of filing: 27.09.2023
(51) Int. Cl.: H04W 36/00, H04W 56/00

(54) **METHOD AND APPARATUS FOR SUPPORTING SYNCHRONIZATION OF UPLINK SIGNAL IN WIRELESS COMMUNICATION SYSTEM**

(30) Priority: 29.09.2022 KR 20220124396
(71) Applicant: Samsung Electronics Co., Ltd., Suwon-si, Gyeonggi-do 16677 (KR)
(72) Inventor: JIN, Seungri, Suwon-si Gyeonggi-do 16677 (KR); AGIWAL, Anil, Suwon-si Gyeonggi-do 16677 (KR)
(74) Representative: Gulde & Partner
(86) International application number: PCT/KR2023/015069
(87) International publication number: WO 2024/072121

(57) **Abstract**

The present disclosure relates to a 5G or 6G communication system for supporting a higher data transmission rate than a 4G communication system such as LTE. A method performed by a UE in a wireless communication system, according to various embodiments of the present disclosure, may comprise the steps of: receiving an RRC message including configuration information regarding at least one target cell from a serving cell of a base station; on the basis of the RRC message, identifying one or more candidate target cells for which a pre-random access channel (RACH) has been configured; performing uplink synchronization for the one or more candidate target cells; measuring channel states for the one or more candidate target cells; and on the basis of the measured channel states, receiving a handover indication from the serving cell of the base station.

## Description

### [Technical Field]

The disclosure relates generally to a wireless communication system and, more specifically, to a method and an apparatus for transmitting and receiving a signal to support synchronization of an uplink signal before performing handover.

### [Background Art]

A review of the development of wireless communication from generation to generation shows that the development has mostly been directed to technologies for services targeting humans, such as voice-based services, multimedia services, and data services. It is expected that connected devices which are exponentially increasing after commercialization of 5th generation (5G) communication systems will be connected to communication networks. Examples of things connected to networks may include vehicles, robots, drones, home appliances, displays, smart sensors installed in various infrastructures, construction machines, factory equipment, and the like. Mobiles devices are expected to evolve into various formfactors such as augmented reality glasses, virtual reality headsets, and hologram devices. In order to provide various services by connecting hundreds of billions of devices and things in the 6th generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (i.e., 1,000 giga)-level bps and a radio latency of 100µsec. That is, 6G communication systems will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance, that is, coverage, will become more crucial. It is necessary to develop, as major technologies for securing the coverage, multi antenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Specifically, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

In a wireless communication system, a UE may measure and report beams belonging to other cells when the UE receives service from a serving cell through a specific beam. When a beam from a neighboring cell is determined to be more suitable than a beam from a serving cell, the UE may perform a cell change to the neighboring cell. According to the existing cell change procedure, a delay time increases and this may lead to inefficient results, and therefore, in particular, a scheme is considered for matching uplink synchronization with respect to a target cell in order to reduce the handover latency to a neighboring cell and to reduce the delay due to random access.

### [Disclosure of Invention]

### [Technical Problem]

Based on the discussion as described above, the disclosure provides a device and a method capable of effectively providing services in a wireless communication system.

More specifically, the disclosure provides an apparatus and a method for transmitting and receiving signals to support synchronization of uplink signals before a UE and a base station perform handover.

### [Solution to Problem]

According to various embodiments of the disclosure, there may be provided a method performed by a UE in a wireless communication system, the method including receiving an RRC message including configuration information regarding at least one target cell from a serving cell of a base station, identifying, based on the RRC message, one or more candidate target cells for which a pre-random access channel (RACH) has been configured, performing uplink synchronization for the one or more candidate target cells, measuring channel states for the one or more candidate target cells, and based on the measured channel states, receiving a handover indication from the serving cell of the base station.

### [Advantageous Effects of Invention]

The disclosure provides a device and a method capable of effectively providing services in a wireless communication system.

The disclosure provides a scheme of matching uplink synchronization with respect to a target cell before indicating a handover, and provides a scheme including an operation of matching uplink synchronization with respect to a target cell in advance before receiving a handover indication from a time when the UE receives a configuration for the target cell. According to various embodiments of the disclosure, when a handover indication is actually performed on the target cell, it is possible to reduce a delay time required for handover by refrain from performing random access and an operation of matching uplink synchronization, and to enable data transmission/reception after a beam change simultaneously with handover to another cell.

### [Brief Description of Drawings]

FIG. 1 illustrates a network of a wireless communication system according to various embodiments of the disclosure.
FIG. 2 illustrates a radio protocol structure of a wireless communication system according to various embodiments of the disclosure.
FIG. 3 illustrates a network including a wireless protocol of a wireless communication system according to various embodiments of the disclosure.
FIG. 4 illustrates a scenario in which a UE connected to a serving cell transmits/receives data through a beam from a transmission reception point (TRP) of a target cell according to various embodiments of the disclosure.
FIG. 5 illustrates a scenario in which a UE changes a beam to a beam of a target cell and a TRP of the target cell according to various embodiments of the disclosure.
FIG. 6 illustrates a signal flow for inter-cell beam management according to various embodiments of the disclosure.
FIG. 7 illustrates a signal flow for performing handover after inter-cell beam management according to various embodiments of the disclosure.
FIG. 8 illustrates another signal flow for performing handover after inter-cell beam management according to various embodiments of the disclosure.
FIG. 9 illustrates an operational flow for matching uplink synchronization before receiving a handover indication by a UE according to various embodiments of the disclosure.
FIG. 10 illustrates an operational flow for operating an uplink synchronization timer for candidate target cells by a UE according to various embodiments of the disclosure.
FIG. 11 illustrates an operational flow for matching uplink synchronization by a base station according to various embodiments of the disclosure.
FIG. 12 illustrates a functional structure of a UE according to various embodiments of the disclosure.
FIG. 13 illustrates a functional structure of a base station according to various embodiments of the disclosure.

### [Mode for the Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards.

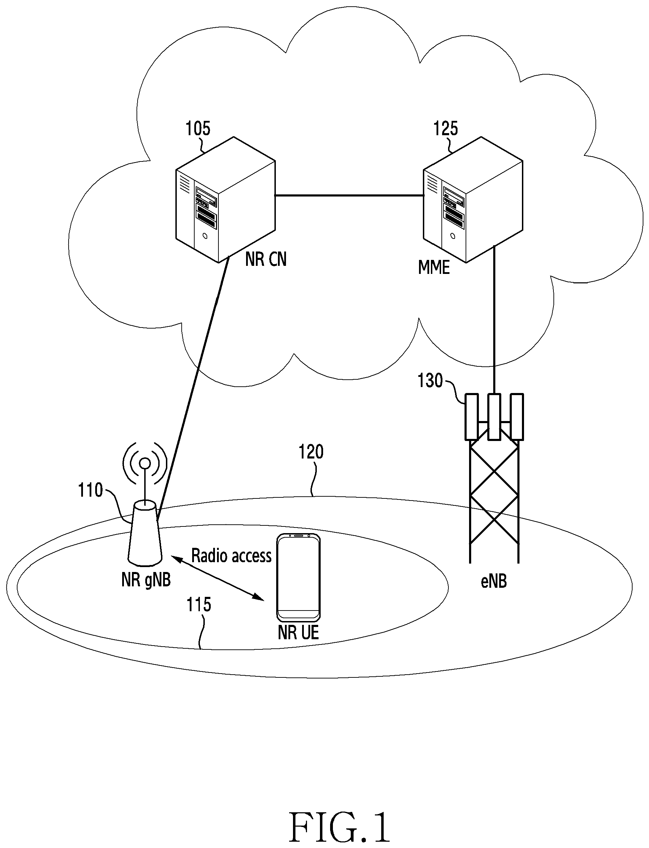

FIG. 1 illustrates a network of a wireless communication system according to various embodiments of the disclosure. Referring to FIG. 1, as illustrated therein, a radio access network of a wireless communication system may include a next-generation base station (new radio node B, NR NB) 110, and a new radio core network (NR CN) or next generation core network (NG CN) 105. A user terminal (new radio user equipment, NR UE or NR terminal) 115 may access an external network via the NR NB 110 and the NR CN 105.

In FIG. 1, the NR NB 110 corresponds to an evolved node B (eNB) of a conventional LTE system. Alternatively, the NR NB 110 may include a gNode B (NB) in an NE system. The NR NB may be connected to the NR UE 115 through a radio channel and provide outstanding services as compared to a conventional node B. In the next-generation mobile communication system, since all user traffic is serviced through a shared channel, a device that collects state information, such as buffer statuses, available transmit power states, and channel states of UEs, and performs scheduling accordingly, and the NR NB 110 may serve as the device. In general, one NRNB 110 may control multiple cells. In order to implement ultrahigh-speed data transfer beyond the current LTE, the next-generation mobile communication system may provide a wider bandwidth than the existing maximum bandwidth, may employ an orthogonal frequency division multiplexing (OFDM) as a radio access technology, and may additionally use a beamforming technology. Furthermore, the next-generation mobile communication system may employ an adaptive modulation & coding (hereinafter referred to as AMC) scheme for determining a modulation scheme and a channel coding rate according to a channel state of a UE. The NR CN 105 may perform functions such as mobility support, bearer configuration, and QoS configuration. The NR CN is a device responsible for various control functions as well as a mobility management function for a UE, and may be connected to multiple base stations. In addition, the next-generation mobile communication system may interwork with the existing LTE system, and the NR CN 105 may be connected to an MME 125 via a network interface. The MME may be connected to an eNB 130 that is an existing base station.

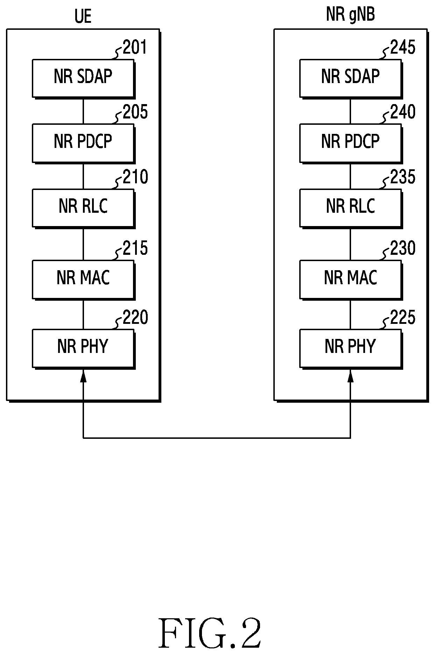

FIG. 2 illustrates a radio protocol structure of a wireless communication system according to various embodiments of the disclosure. Referring to FIG. 2, a radio protocol of a next-generation mobile communication system may include an NR service data adaptation protocol (SDAP) 201 or 245, an NR packet data convergence protocol (PDCP) 205 or 240, an NR radio link control (RLC) 210 or 235, and an NR medium access controls (MAC) 215 or 230 on each of UE and NR base station sides.

The main functions of the NR SDAP 201 or 245 may include some of functions below.
- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 205 or 240 may include some of functions below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The reordering of the NR PDCP device refers to a function of reordering PDCP PDU received from a lower layer in an order based on PDCP sequence numbers (SNs), and may include at least one of a function of transferring data to an upper layer according to a rearranged order, a function of directly transferring data without considering order, a function of rearranging order to record lost PDCP PDUs, a function of reporting the state of lost PDCP PDUs to a transmission side, or a function of requesting retransmission of lost PDCP PDUs.

The main functions of the NR RLC 210 or 235 may include some of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery of the NR RLC device may include at least one of a function of successively delivering RLC SDUs received from the lower layer to the upper layer, a function of, if one original RLC SDU is divided into several RLC SDUs and then the RLC SDUs are received, reassembling the several RLC SDUs and transferring the reassembled RLC SDUs, a function of rearranging received RLC PDUs with reference to RLC sequence numbers (SNs) or PDCP sequence numbers (SNs), a function of rearranging order to record lost RLC PDUs, a function of reporting the state of lost RLC PDUs to a transmission side, a function of requesting retransmission of lost RLC PDUs, a function of, if there is a lost RLC SDU, sequentially transferring only RLC SDUs before the lost RLC SDU to an upper layer, a function of, although there is a lost RLC SDU, if a predetermined timer has expired, sequentially transferring, to an upper layer, all the RLC SDUs received before the timer is started, or a function of, although there is a lost RLC SDU, if a predetermined timer has expired, sequentially transferring all the RLC SDUs received up to now, to an upper layer. In addition, the in-sequence delivery of the NR RLC layer may process RLC PDUs in the received order (regardless of the sequence number order, in the order of arrival) and deliver same to the PDCP device regardless of the order (out-of-sequence delivery), and may, in the case of segments, receive segments which are stored in a buffer or which are to be received later, reconfigure same into one complete RLC PDU, and then process and deliver same to the PDCP device. The NR RLC layer may include no concatenation function, which may be performed in the NR MAC layer or replaced with a multiplexing function of the NR MAC layer.

The out-of-sequence delivery of the NR RLC device may include at least one of a function of directly delivering RLC SDUs received from a lower layer to an upper layer regardless of the order, a function of reassembling and delivering multiple RLC SDUs received, into which one original RLC SDU has been segmented, or a function of storing and reordering the RLC SNs or PDCP SNs of received RLC PDUs and recording lost RLC PDUs.

The NR MAC 215 or 230may be connected to multiple NR RLC layer devices configured in one UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 220 or 225 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

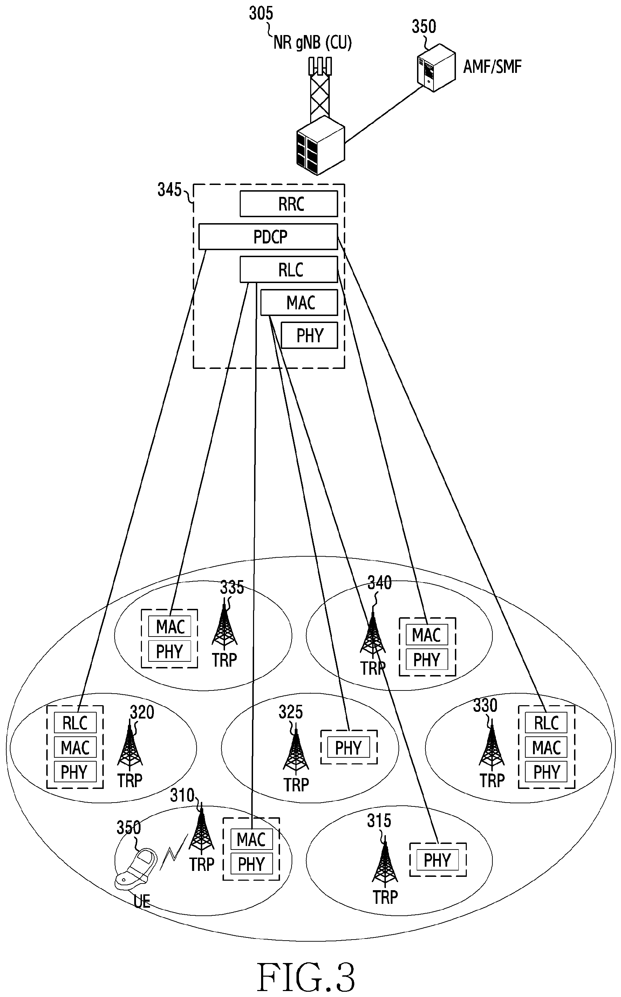

FIG. 3 illustrates a network including a wireless protocol of a wireless communication system according to various embodiments of the disclosure. Referring to FIG. 3, a cell served by an NR gNB 305 operating based on a beam may include a plurality of transmission reception points (TRPs) 310, 315, 320, 325, 330, 335, and 340. The TRPs 310, 315, 320, 325, 330, 335, and 340 may include blocks obtained by separating some functions of transmitting and receiving a physical signal from a conventional NR base station (eNB), and may include a plurality of antennas. The NR gNB 305 may refer to a central unit (CU), and the TRP may refer to a distributed unit (DU). The functions of the NR gNB 305 and the TRPs may be configured by separating each layer from the PDCP/RLC/MAC/PHY layers such as 345. The TRP may have only the PHY layer and perform the function of the corresponding layer (315, 325), the TRP may have only the PHY layer and the MAC layer and perform the functions of the corresponding layers (310, 335, 340), and the TRP may have only the PHY layer, the MAC layer, and the RLC layer and perform the functions of the corresponding layers (320, 330). Particularly, the TRPs 310, 315, 320, 325, 330, 335, and 340 may use a beamforming technology for transmitting/receiving data by generating narrow beams in various directions using a plurality of transmission/reception antennas. The UE 350 may access the NR gNB 305 and an external network through the TRPs 310, 315, 320, 325, 330, 335, and 340. In order to serve users, the NR gNB 305 may collect and schedule state information such as the buffer state, the available transmission power state, the channel state, and the like of UEs to support connection between the UEs and the core network (CN), in particular, the AMF/SMF 350.

According to various embodiments of the disclosure, the TRP may include structures 315 and 325 having only the PHY layer and capable of performing the function of the corresponding layer.

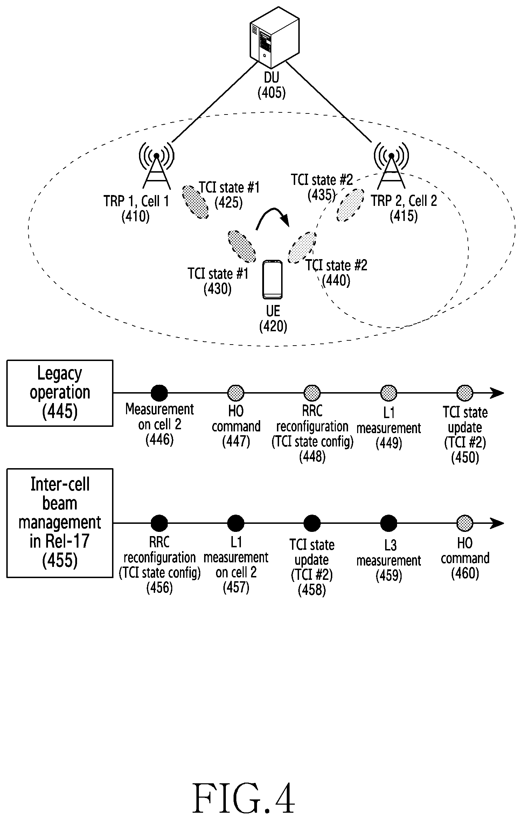

FIG. 4 illustrates a scenario in which a UE connected to a serving cell transmits/receives data through a beam from a transmission reception point (TRP) of a target cell according to various embodiments of the disclosure. Specifically, FIG. 4 illustrates a scenario for inter-cell beam management according to an embodiment, in which a UE transmits/receives data through a beam of a TRP of a neighboring cell supporting beam change based on L1/L2 while maintaining a connection state with the serving cell. According to various embodiments of the disclosure, a cell with which the UE currently maintains a connection state may be referred to as a serving cell, and a cell to which the handover is to be performed may be referred to as a target cell. According to an embodiment, a neighboring cell or other cell other than the serving cell may include a target cell to which the UE is to perform the handover.

Referring to FIG. 4, although a plurality of cells (TRP1-Cell1, TRP2-Cell2) 410 and 415 exist in a single distributed unit (DU) 405, various embodiments of the disclosure may be applied to the case of inter-DU (e.g., each DU includes one TRP-Cell). In addition, according to various embodiments of the disclosure, a cell (TRP 2, Cell 2) which is not a serving cell supporting L1/L2-based mobility (e.g., beam change and serving cell change) may include a neighbor cell, a non-serving cell, or an additional cell with the physical cell identity (PCI) different from the serving cell.

In the conventional UE beam change procedure 445, the UE 420 may transmit/receive data in a connected state through TRP 1 410 of the serving cell 1, and may use TCI state 1 425 or 430 which is the optimal beam. The UE may receive, from the serving cell 410, configuration information for L3 channel measurement (radio resource management (RRM)) for the additional cell (TRP 2-Cell 2) 415 with the different PCI from the serving cell, based on received RRC configuration information, and perform an L3 measurement operation 446 on the received frequency and cell. Thereafter, the serving cell (TRP 1-Cell 1) 410 may indicate a handover to another cell (TRP 2-Cell 2) 415 based on the reported measurement value (indicated by reference numeral 447), and when the handover may be completed, additional RRC configuration information may be transferred to the UE 420 through TRP 2-Cell 2 415 (indicated by reference numeral 448). The additional RRC configuration information may include UL/DL configuration information in the corresponding cell and L1 measurement-related configuration (CSI-RS measurement and reporting), and particularly may include TCI state configuration information for the physical downlink control channel (PDCCH) and the physical downlink shared channel (PDSCH) channel. The UE 420 may perform L1 measurement according to configuration (indicated by reference numeral 449), and the base station may update the TCI state through L1/L2 signaling according to the measurement report (indicated by reference numeral 450). In this process, TCI state 2 440, which is an optimal beam, may be indicated. In this operation, until the handover, the serving cell may be Cell 1 and, after the handover, Cell 2 may be the serving cell. Accordingly, many procedures and times are required even after handover until the optimal beam is indicated.

According to various embodiments of the disclosure, unlike the conventional UE beam change procedure 445, an enhanced beam change scheme 455 may include the content as follows. The UE may receive, from the serving cell, a beam configuration associated with the additional cell (TRP 2-Cell 2) 415 having different PCI from the serving cell, based on the RRC configuration information 456 received from the serving cell 410. The beam configuration associated with the additional cell (TRP 2-Cell 2) 415 with the different PCI from the serving cell (i.e., the part of associating the TCI state corresponding to TRP2) may adopt a method for indicating by associating a new cell ID (Physical cell ID PCI, additional PCI-r17) as follows.

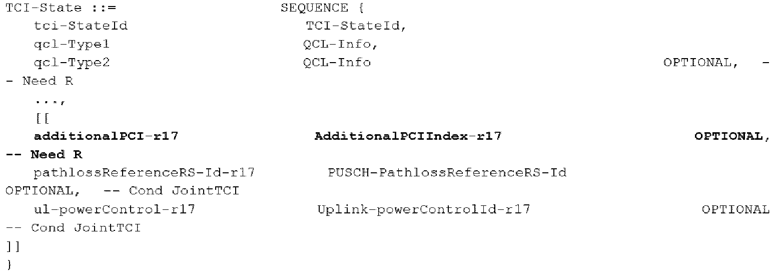

In addition, a unified TCI state framework may be applied for beam management between the corresponding cells. The unified TCI state framework may be configured as one of a joint UL/DL mode and a separate UL/DL mode as applying a common TCI state framework in uplink, downlink, a common channel, and a dedicated channel. 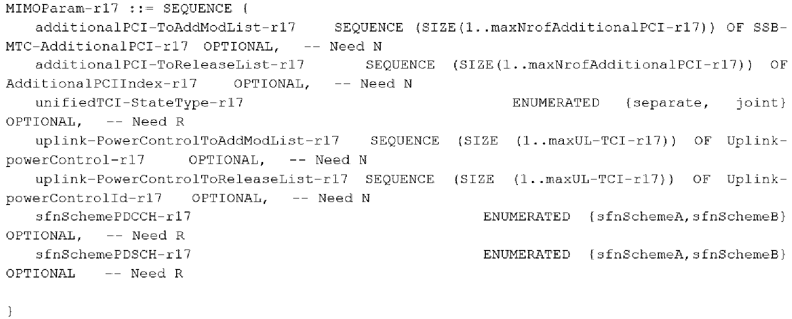
1. Joint UL/DL mode: Configure the UL and DL to share the same TCI configurations (in PDSCH-Config). 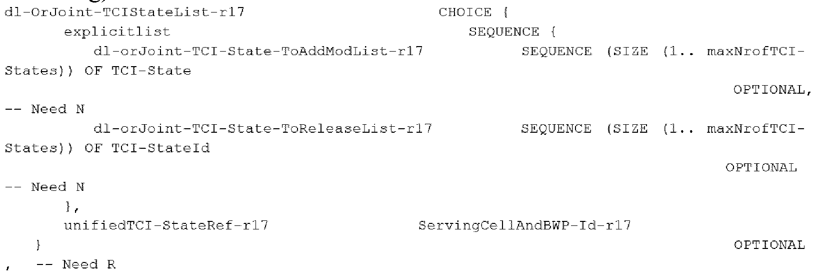
2. Separate UL/DL mode: UL and DL provide their respective TCI configurations. The TCI state for DL follows the configuration in dl-OrJoint-TCIStateList-r17 (in PDSCH-Config), and the TCI state for UL follows ul-TCI-StateList-r17 (in BWP-UplinkDedicated).

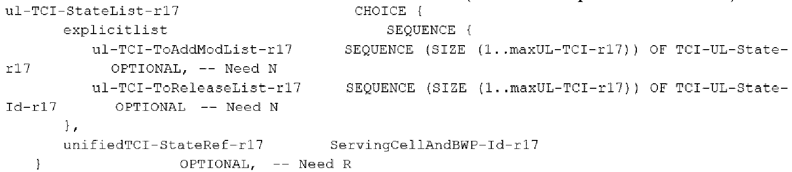

After the configuration for the TRP 2-Cell 2 is received in the RRC connected state to serving cell 1, the UE may perform the L1 measurement on the TRP 2-Cell 2 according to the configuration and report the measurement result to the serving cell (Cell 1) 410 (indicated by reference numeral 457). When it is determined that a change to a specific beam (TCI state 2) 435 or 440 of TRP 2 (Cell 2) 415, rather than the serving cell beam (TCI state 1) 425 or 430 is required according to the measurement result, the serving cell may trigger a beam change and indicate the beam change to the UE through L1/L2 signaling (indicated by reference numeral 458). The UE 420 may change the beam to a specific beam (TCI state 2) 440 of TRP 2 (Cell 2) 415 based on the corresponding indication, and perform a physical channel establishment and higher layer establishment operation associated with the configured beam. In this case, although the UE 420 is connected to the serving cell (Cells 1) 410, the UE may perform data transmission/reception using the channel link of TRP 2 (Cell 2) 415 (PDCCH/PDSCH reception, PUCCH/PUSCH transmission). For example, the UE may perform transmission/reception of the common control channel through the serving cell (Cell 1) 410. Thereafter, the UE may perform the L3 measurement operation based on the measurement configuration configured in the independent serving cell (indicated by reference numeral 459), receive a handover command message from the serving base station (Cell 1), and change the serving cell to Cell 2 (indicated by reference numeral 460). Through this scheme 455, the UE may perform data transmission/reception to/from a specific TRP 2 of Cell 2 supporting L1/L2-based mobility in a state of being connected to the serving cell, and may continuously use the corresponding beam even after handover.

According to an embodiment, the RRC configurations for the configurations and operations related to the L1 measurement and report in operation 457 specifically include the following. According to various embodiments of the disclosure, the following content is basically applied to the following embodiments of the disclosure, and an enhancement scheme may be added in the following embodiments.

### 1. CSI measurement configuration

- CSI-RS resource and resource pool (nzp-CSI-RS, csi-IM, csi-SSB) requiring measurement
- CSI-RS resource configuration (aperiodic, semi-permanent) and triggering configuration requiring measurement
- When CSI-RS resource is based on the SSB resource, provides additional PCI information to enable L1 measurement from a neighbor cell (up to seven neighbor cells (PCI) may be added in one serving cell)

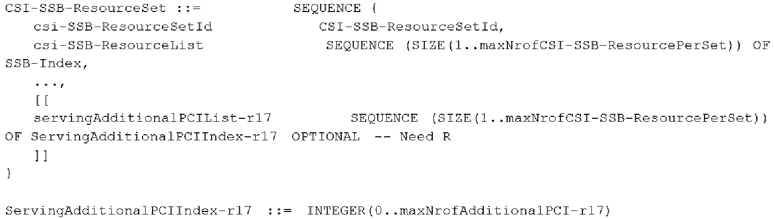

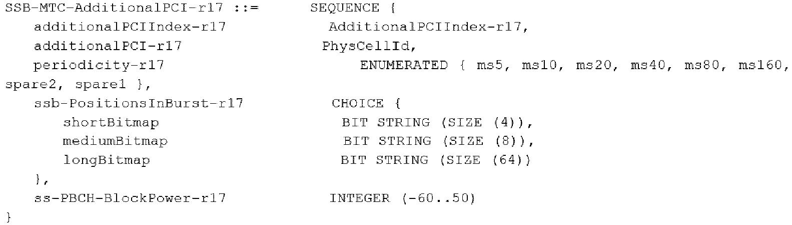

### 2. CSI report configuration

- Report type: periodic report, semi-periodic report via PUCCH, semi-periodic report via PUSCH, aperiodic report via PUSCH (periodic, semi-persistent for PUCCH, semi-persistent for PUSCH, aperiodic)

### Report quantity

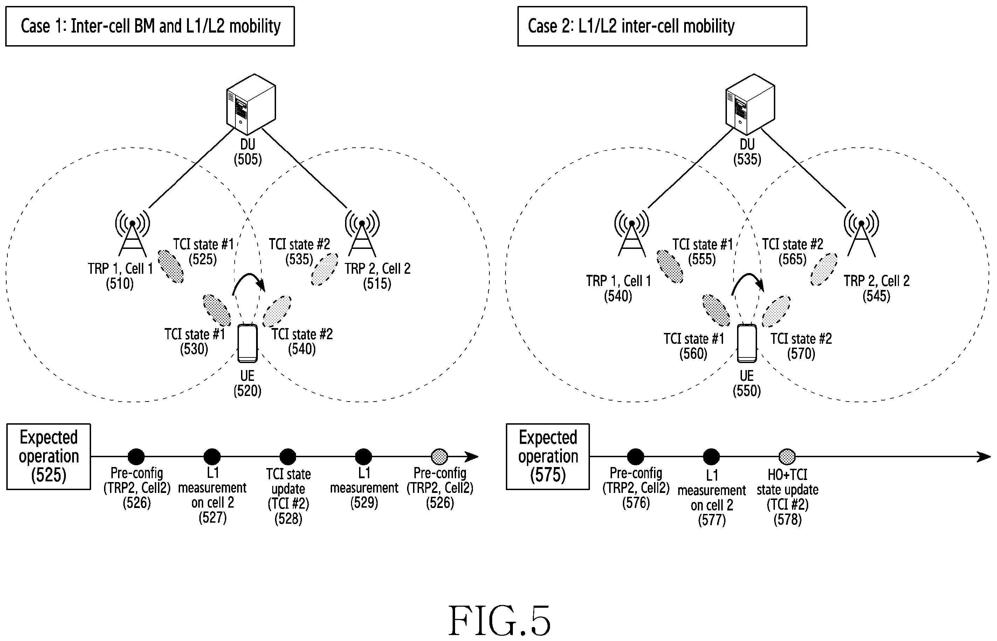

Other configurations required for reporting
FIG. 5 illustrates a scenario in which a UE changes a beam to a beam of a target cell and a TRP of the target cell according to various embodiments of the disclosure. Specifically, FIG. 5 illustrates a scenario in which a UE transmits/receives data by changing a serving cell and a beam to a TRP of a cell supporting beam change based on L1/L2 according to various embodiments of the disclosure. FIG. 5 illustrates a case in which a plurality of cells TRP 1-Cell 1 and TRP 2-Cell 2 510, 515, 540, and 545 exist in one distributed unit (DU) 505 or 535, the disclosure is not limited thereto, and may also be applied to the case of inter-DU (each DU may configure one TRP-cell) according to various embodiments of the disclosure.

Unlike the conventional UE beam change procedure 445 or 455 described in FIG. 4, the enhanced beam change scheme 525 or 575 considered in various embodiments described with reference to FIG. 5 are as follows.
Case 1 (indicated by reference numeral 525): Perform L1/L2 handover after performing an inter-cell beam management (change) operation.
Case 2 (indicated by reference numeral 575): Perform L1/L2 handover immediately

First, the overall operation of case 1 is described. The UE may, based on RRC configuration information from the serving cell 510, receive common configuration and dedicated configuration information about the additional cell (TRP 2-Cell 2) 515 with the different PCI from the serving cell (indicated by reference numeral 526). For example, configuration information corresponding to ServingCellConfigCommon and ServingCellConfig, ServingCellID or candidateCellID (cell ID associated with the PCI), may be provided in advance. The configuration information received by the UE may be provided in the form of pre-configuration in RRC configuration, and configuration information for a plurality of cells may be included. Further, the configuration information received by the UE may include all pieces of configuration information (cell configuration, bearer configuration, security key configuration, etc.) applied when the UE moves to another cell (handover). The configuration information received by the UE may include the unified TCI state configuration described in operation 456 and configurations related to the L1 measurement and report. The situations disclosed in FIG. 5 may include a specific method for a structure for previously providing a configuration for candidate neighbor cells where L1/L2 handover may be performed, an operation in which the configuration information is optionally applied after handover in L1/L2 signaling, and an L1/L2 beam change and cell change (handover).

Upon receiving a configuration for TRP 2-Cell 2 515 in the RRC connected state to serving cell 1, the UE may perform L1 measurement on the TRP 2-Cell 2 515 according to the configuration received in operation 527 and report the measurement result to the serving cell (Cell 1) 510. When it is determined that a change to a specific beam (TCI state 2) 540 of TRP 2 (Cell 2) 515 from the serving cell beam (TCI state 1) 525 is required according to the measurement result, the serving cell may trigger a beam change in operation 528 and indicate the beam change to the UE through L1/L2 signaling. The UE may perform beam change to TRP 2 (Cell 2) 515 based on the received indication and transmit/receive data through the TRP 2 (Cell 2) 515. In this case, the serving cell is not changed, and the UE may still be RRC connected to the serving cell (Cell 1) 510. Thereafter, the UE still performs the L1 measurement on the TRP 2-Cell 2 515 and reports the measurement result to the serving cell (Cell 1) 510. The serving cell (Cell 1) 510 may indicate handover to the UE when the L1 measurement reported by the UE satisfies a triggering condition for the handover to the TRP 2-Cell 2 515. The handover indication of the serving cell (Cell 1) 510 may be transmitted based on the L1/L2 message. For example, an indicator indicating handover may be included in the MAC CE or DCI. According to embodiments based on Case 1, an operation of matching uplink synchronization with respect to a target cell by the UE before performing handover to the target cell by receiving a handover message may be included.

When describing the operation of Case 2, the UE may receive common configuration and dedicated configuration information for the additional cell (TRP 2-Cell 2) 545 having different PCI from the serving cell 540 through RRC configuration information (indicated by reference numeral 576). For example, configuration information corresponding to ServingCellConfigCommon and ServingCellConfig, ServingCellID or candidateCellID (cell ID associated with the PCI), may be provided in advance. The corresponding configuration information may be provided in the form of pre-configuration in RRC configuration, and may include configuration information for a plurality of cells. Further, the corresponding configuration may include all pieces of configuration information (e.g., cell configuration, bearer configuration, security key configuration, etc.) applied when the UE moves to the corresponding cell (handover). Further, the corresponding configuration may include the unified TCI state configuration described in operation 456 and configurations related to the L1 measurement and report. According to embodiments based on Case 2, an operation of matching uplink synchronization with respect to the target cell by the UE before performing handover to the target cell by receiving a handover message may be included.

In the RRC connected state to serving cell 1, after a configuration for TRP 2-Cell 2 545 is received, the UE may perform L1 measurement on the TRP 2-Cell 2 545 according to the configuration received in operation 577 and report the measurement result to the serving cell (Cell 1) 540. When it is determined that handover is required simultaneously with a change to a specific beam (TCI state 2) 570 of TRP 2 (Cell 2) 545 from the serving cell beam (TCI state 1) 545 according to the measurement result, the serving cell may trigger a beam change and handover in operation 578 and indicate, to the UE, the beam change and handover through L1/L2 signaling. The UE may perform handover simultaneously with beam change to TRP 2 (Cell 2) 515 based on the received indication and transmit/receive data through the corresponding TRP 2 (Cell 2) 515. In this case, the UE may apply the configuration information for the target cell where handover is performed, as preconfigured in operation 576. Depending on whether uplink synchronization is required in the operation described above, the UE may perform random access or may omit random access to the target cell.

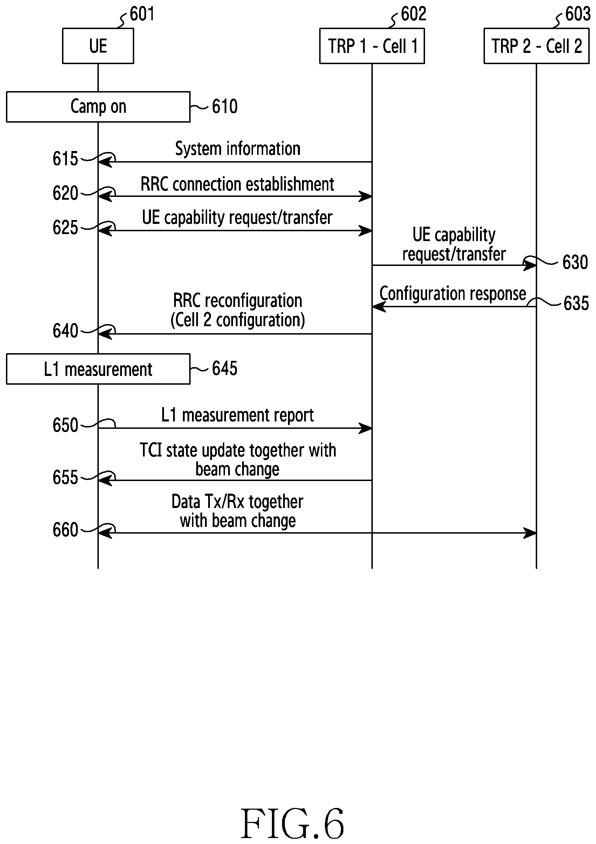

FIG. 6 illustrates a signal flow for inter-cell beam management according to various embodiments of the disclosure.

The UE 601 may receive system information from cell 1 602 in a camp-on state 610 (operation 615). After receiving the system information, the UE may perform a transition procedure to the RRC connected state (operation 620). The serving cell 602 may request a UE capability (UE capability enquiry message) from the UE, and the UE may may transfer information on the UE capability (UE capability information message) according to a request of base station request (operation 625). The information on the UE capability may include information on whether to support L1/L2-based inter-cell beam change/management and handover. The UE may transfer the information on the UE capability through signaling of at least one of UE-specific capability, band-specific capability, or band combination-specific capability.

The serving cell 602 may request, from neighboring cell 2 603 that supports L1/L2-based mobility, the configuration information required when the UE performs beam change and handover based on L1/L2 (operation 625). The cell 2 603 may include the relevant configuration information in a response message with respect to the request from the serving cell and transfer the response message (operation 630). operations 630 and 635 may be omitted in network implementations where cell 1 602 and cell 2 603 reside within a single DU (intra-DU scenario).

In operation 640, the serving cell may transfer, to the UE, common/dedicate configuration information that is applied after the L1/L2-based movement (beam change) to cell 2 603 is indicated. The specific configuration method and content may follow the operations disclosed in FIG. 4. The TCI state configurations and L1 measurement and report configurations provided in operation 640 may also follow the operations described in FIG. 4. There may be a plurality of neighbor cells, and a serving cell may perform the same procedure with a plurality of neighbor cells. For example, a serving cell may be provided with configurations for up to 7 neighboring cells.

In operation 645, the UE may perform the L1 measurement associated with TRP 2-Cell 2 while maintaining the connection state with the serving cell 602. The UE may report the measurement result to the serving cell 602 according to a preconfigured L1 measurement report configuration method (operation 650). The serving cell 602 may determine a beam change of the UE, based on the received measurement result. When the serving cell determines that a change from a specific beam of the serving cell (TRP 1-Cell 1) to a specific beam of TRP 2-Cell 2 is required, the serving cell may instruct the UE to change its TCI state to the target cell (TRP 2-Cell 2) via L1/L2 signaling in operation 655. The L1/L2 signaling in operation 655 may be a medium access control (MAC) control element (CE) or downlink control information (DCI), and may include information indicating a change to a specific beam of TRP 2-Cell 2. For example, when multiple TCI states are activated, a MAC CE may be used, and DCI may be used to indicate one of the activated TCI states. Alternatively, only one TCI state may be indicated by the MAC CE. In this case, the DCI may be omitted. In operation 660, the UE may change the beam to the indicated beam of TRP 2-Cell 2 603 and perform data transmission/reception through the changed beam. In the operations described above, the UE may still maintain the RRC connection with the serving cell.

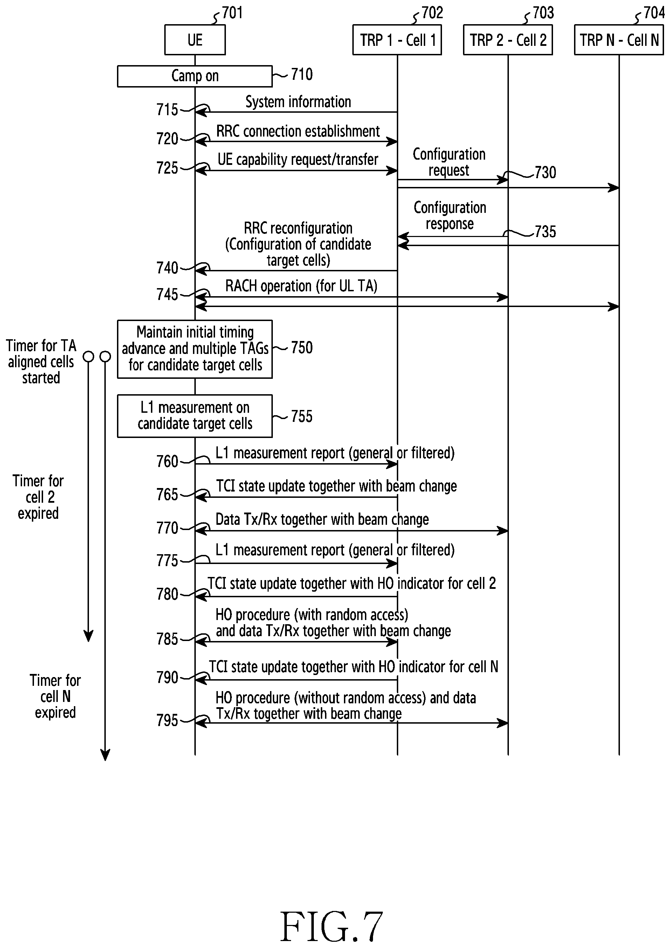

FIG. 7 illustrates a signal flow for performing handover after inter-cell beam management according to various embodiments of the disclosure. Referring to FIG. 7, an operation of matching uplink synchronization with a target cell by the UE before receiving a handover indicator according to various embodiments of the disclosure may be included.

A UE 701 may receive system information from cell 1 702 in a camp-on state 710 (operation 715). The UE 701 may perform a transition procedure to an RRC connected state (operation 720). Thereafter, a serving cell 702 may request information about a UE capability (UE capability enquiry message) from the UE. The UE may transfer information about UE capability (UE capability information message) according to the request of a base station (operation 725). The information about the UE capability may include information about whether the UE supports L1/L2-based inter-cell beam change/management and handover. The information about the UE capability may also include capabilities related to whether to support an operation of pre-matching uplink synchronization with respect to candidate target cells before handover. The UE may transfer information about UE capabilities through signaling at least one of UE-specific capabilities, band-specific capabilities, or band combination-specific capabilities.

The serving cell 702 may request, from neighboring cells 703 and 704 that support L1/L2-based mobility, the configuration information required when the UE performs beam change and handover based on L1/L2 (operation 730). The neighboring cells 703 and 704 may include the relevant configuration information in a response message with respect to the received request and transfer the response message (operation 735). In operations 730 and 735, inter-node RRC messages or Xn, F1 interfaces, etc. may be used to request and transfer configurations related to the pre-configuration of cells associated with beam changes and handovers between L1/L2 cells. In a network implementation, when cell 1 702 and neighboring cells 703 and 704 exist within a single DU (intra-DU scenario), the operations described above may be omitted.

When the inter-cell beam change and handover are indicated through L1/L2-based signaling, the UE may apply configurations for a cell for which the preconfigured handover is indicated. For example, in operation 740, an RRC structure for supporting L1/L2-based inter-cell beam change (management) and handover operation and pre-configuration for candidate neighboring cells may be provided, and this structure and pre-configuration may operate based on the structure described in FIG. 5.

In operation 740, the serving cell may transfer, to the UE, common/dedicate configuration information that is applied after the L1/L2-based movement (beam change and handover) to the neighboring cells 703 and 704 is indicated. According to various embodiments of the disclosure, the operations of FIG. 7 may differ from the operations of FIG. 6 in that the UE may receive common configuration and dedicated configuration information for additional cells 703 and 704 having different PCIs from the serving cell in operation 740. For example, since the UE needs to receive in advance all of the configurations for the corresponding cell applied after the handover, ServingCellID, candidateCellID (cell ID associated with the PCI), ServingCellConfigCommon, configuration information corresponding to ServingCellConfig, or configurations for a cell group (MAC, RLC, etc.) may be provided to the UE in advance. The configuration information received by the UE may be provided in the form of a pre-configuration in the RRC configuration, and may include configuration information for a plurality of cells and cell groups. In addition, the configurations received by the UE may include all pieces of configuration information (cell configurations, bearer configurations, security key, measurement configurations, etc.) applied when the UE moves (handovers) to the corresponding cell. The configurations may include configurations related to L1 measurement and reports and the unified TCI state configuration disclosed in operation 456.

Referring to FIG. 7, in addition to the RRC configuration information for the basic candidate target cells, configuration information related to performing uplink synchronization for the candidate target cells before handover may be included. Throughout the operations disclosed in FIG. 7, terms such as pre-timing advance (TA), pre-RACH, or pre-random access may be used interchangeably. Further, the corresponding configuration may be configured with values disclosed below. According to various embodiments of the disclosure, the term "pre-TA" is used, but the pre-TA may include pre-random access or an operation of matching uplink synchronization similar to pre-random access.
- Establishing multiple timing advance groups (TAGs) for candidate target cells (hereinafter, including additional TAGs (aTAGs)): Introducing a new concept of a primary timing advance group (pTAG) by applying the existing concept of a pTAG to multiple candidate target cells or a set of candidate target cells having the same TA. For example, one aTAG may be introduced for each DU and an index aTAG ID may be assigned (multiple candidate target cells are included within one aTAG). When N aTAGs are established, a UE and a base station may store and manage TAs for the corresponding N aTAGs.
- An indicator (pre-TA indicator) indicating whether or not to perform pre-TA on the candidate cells applied for each aTAG. According to an embodiment, an indicator indicating the corresponding pre-TA may be indicated for each of the candidate cells. This is because the pre-TA may be indicated differently for each of the cells according to the needs of the base station, even if they are within the same DU.
- A timer indicating the duration of TA maintenance after completion of Pre-TA (hereinafter, including aTAT-additional timing advance timer): a timer may be configured for each aTAG or candidate target cell.
- RACH-related configurations for candidate target cells for performing pre-TA: These may be configured like pre-TA indicators, and configurations for contention based random access (CBRA) and contention free random access (CFRA) may be provided.
- Basically, CBRA operation performs pre-TA for candidate target cells.
- When the base station includes CFRA configurations, pre-TA for candidate target cells is performed using CFRA.

Basically, the configurations described above may include both intra/inter-DU scenarios, and since in an intra-DU situation, the TAs of candidate target cells within one DU may coincide, one aTAG and aTAT may be configured. However, this is not limited thereto, and may of course be processed as different values by the implementation of the base station. In an inter-DU situation, aTAG and aTAT may be configured and applied for each DU. According to an embodiment, the pre-TA indicator and random access resources may be configured for only one or some cells among the multiple cells in the aTAG. This is because the TA is the same for all cells in the TAG, and thus performing the pre-TA operation for all cells increases complexity by accompanying unnecessary procedures with the UE and the base station. In addition, the pre-random access operation described above in the pre-TA may include an operation of securing the uplink synchronization, and may include at least the procedure of msg1 (random access preamble transmission) and msg2 (random access response (RAR) reception) in conventional random access. In addition, the operation of msg3 and msg4 may also be included in the pre-TA procedure. According to an embodiment, signaling used for the pre-TA or the TA-related MAC CE and access-related MAC CE and ID may be partially changed to be distinguished from the pre-TA. For example, an example of a partial change in the signaling may include the use of a differentiated MAC CE having a new logical channel ID (LCID) and changes in the structure of the MAC CE (e.g., consideration of an increased aTAG size, introduction of an ID for differentiation, etc.), and the like.

In operation 745, the UE may perform pre-TA operation (e.g., random access-like operation) on the candidate target cells, particularly, the cells for which the pre-TA operation is indicated, according to the pre-TA-related configurations. For example, the UE may transmit a random access preamble via the CBRA or CFRA resources established for the corresponding candidate target cells, and match uplink synchronization with respect to the corresponding cell by receiving a random access response (RAR) (here, the procedure of msg3 and msg4 may also be added in the corresponding operation). For example, the UE may obtain an uplink synchronization value for the corresponding cell.

In operation 750, the UE may store and manage the synchronization value for the aTAG to which the corresponding cell belongs, as a matched synchronization value. After the operation described above, the UE may start the aTAT timer for candidate target cells for which the uplink synchronization has been matched (based on the result of random access). According to an embodiment, the expiration time of the aTAT timer may be provided for each cell or each aTAG group in operation 740.

In operation 755, the UE may perform L1 measurement associated with the neighboring cells 703 and 704 while maintaining the connection with the serving cell 702. The UE may report, to the serving cell 702, the measurement result performed according to a preconfigured L1 measurement report configuration method (operation 760). The L1 measurement report 760 may be performed after operation 740. According to an embodiment, operation 760 may be performed concurrently with or after operation 745 and operation 750, but may also be performed before the operations 745 and 750. For example, the operations of operation 745 to operation 760 are operations by the base station configuration in operation 740 and, unlike the order shown in FIG. 7, may be performed concurrently or in priority to other operations.

The serving cell 702 may determine a beam change of the UE, based on the received measurement result. When it is determined that a change from a specific beam of the serving cell (TRP 1-Cell 1) to a specific beam of TRP 2-Cell 2 is required, in operation 765, the serving cell 702 may instruct the UE to change its TCI state to the target cell (TRP 2-Cell 2) 703 via L1/L2 signaling. In operation 765, the L1/L2 signaling may be a MAC CE or DCI, and may include information indicating the change to a specific beam of TRP 2-Cell 2. For example, when multiple TCI states are activated, a MAC CE may be used, and one of the activated TCI states may be indicated based on DCI. According to an embodiment, only one TCI state may be indicated by the MAC CE. In this case, the DCI may be omitted.

In operation 770, the UE may change the beam to the indicated beam from TRP 2-Cell 2 703 and perform data transmission/reception through the corresponding beam. In the operations described above, the UE may still maintain an RRC connection with the serving cell.

The UE may subsequently perform L1 measurement associated with the neighboring cells 703 and 704 while maintaining a connection to the serving cell 702 according to the received configurations. The UE may report the measurement result based on the preconfigured L1 measurement report configuration method to the serving cell 702 (operation 775). The serving cell 702 may determine a cell change (handover) of the UE based on the received measurement result, and may indicate the handover simultaneously with the TCI state change of the UE to the target cell (TRP 2-Cell 2) 703 via L1/L2 signaling in operation 780. The L1/L2 signaling in operation 780 may include a MAC CE or DCI. The L1/L2 signaling may include at least one of information indicating a change and handover to a specific beam of the TRP 2-Cell 2 (indicated through an LCID or a field in a MAC CE), information about whether to perform random access (pre-TA), or information about whether to perform an L2 reset (MAC reset, RLC/PDCP reestablishment) operation. For example, when multiple TCI states are activated, a MAC CE may be used, and one of the activated TCI states may be indicated based on DCI. According to an embodiment, the MAC CE may indicate only one TCI state. In this case, the DCI may be omitted.

In operation 785, the UE may perform handover, based on the information included in the L1/L2 signaling received in operation 780, change the beam to the indicated beam, and perform data transmission/reception through the corresponding beam. According to an embodiment, in the operation described above, when the aTAT timer of the UE for the target cell (TRP 2-Cell) 703 is running but has not expired, and an indicator indicating whether random access is performed (pre-TA) is inactive in the L1/L2 signaling, the UE may omit a random access operation when performing handover to the corresponding target cell and apply the uplink synchronization stored in the corresponding target cell.

In operation 790, the base station may indicate the handover to the target cell (TRP M-Cell N) 704 via L1/L2 signaling, together with a change in the TCI state of the UE. The L1/L2 signaling in operation 790 may include a MAC CE or DCI, and may include at least one of the following: information indicating the change and handover to a specific beam of TRP M-Cell N (indicated through an LCID or a field in a MAC CE), information about whether to perform random access (pre-TA), or information about whether to perform an L2 reset (MAC reset, RLC/PDCP reestablishment) operation. For example, when multiple TCI states are activated, a MAC CE may be used, and one of the activated TCI states may be indicated based on DCI. According to an embodiment, only one TCI state may be indicated in the MAC CE. In this case, the DCI may be omitted.

In operation 795, the UE may perform handover based on the information included in the L1/L2 signaling received in operation 790, and may change the beam to the indicated beam and perform data transmission/reception through the corresponding beam. In the operation described above, when the aTAT timer of the UE for the target cell (TRP M-Cell N) 704 has expired or an indicator indicating whether random access is performed (pre-TA) is active in the L1/L2 signaling, the UE may perform a random access operation when performing the handover to the target cell.

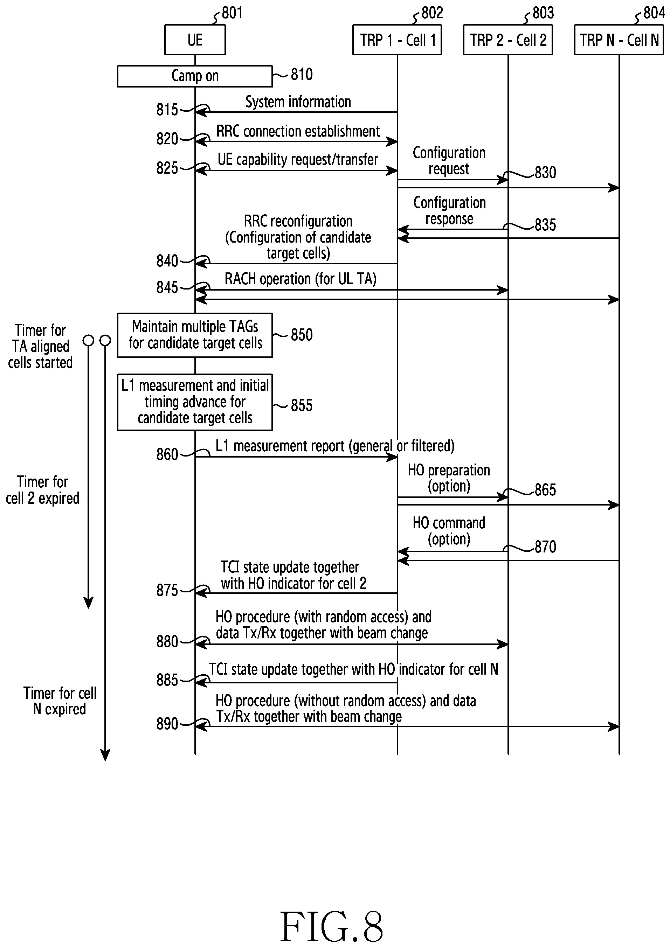

FIG. 8 illustrates another signaling flow for performing handover after inter-cell beam management according to various embodiments of the disclosure. Specifically, referring to FIG. 8, an operation of pre-matching the uplink synchronization with the target cell before receiving the handover indicator is illustrated.

A UE 801 may receive system information from cell 1 802 in a camp-on state 810 (operation 815). The UE 801 may perform a transition procedure to an RRC connected state (operation 820). Thereafter, a serving cell 802 may request a UE capability (UE capability enquiry message) from the UE. The UE may transfer the UE capability (UE capability information message) according to the request of a base station (operation 825). The UE capability may include information about whether the UE supports L1/L2-based inter-cell beam change/management and handover. In addition, the UE capability may include capabilities related to whether to support an operation of pre-matching uplink synchronization with respect to candidate target cells before handover. The UE may transfer the corresponding UE capabilities through signaling at least one of UE-specific capabilities, band-specific capabilities, or band combination-specific capabilities.

The serving cell 802 may request, from neighboring cells 803 and 804 that support L1/L2-based mobility, the configuration information required when the UE performs beam change and handover based on L1/L2 (operation 830). The neighboring cells 803 and 804 may include the relevant configuration information in a response message with respect to the received request and transfer the response message (operation 835). In operations 830 and 835, inter-node RRC messages or Xn, F1 interfaces, etc. may be used to request and transfer configurations related to the pre-configuration of cells associated with beam changes and handovers between L1/L2 cells. In a network implementation, when cell 1 802 and neighboring cells 803 and 804 exist within a single DU (intra-DU scenario), the operations 830 and 835 described above may be omitted.

When the inter-cell beam change and handover are indicated through L1/L2-based signaling, the UE may apply configurations for a cell for which the preconfigured handover is indicated. For example, in operation 840, an RRC structure for supporting L1/L2-based inter-cell beam change (management) and handover operation and particularly, pre-configuration for candidate neighboring cells may be provided, this may include the operation and the structure disclosed in FIG. 5. In operation 840, the serving cell may transfer, to the UE, common/dedicate configuration information that is applied after the L1/L2-based movement (beam change and handover) to the neighboring cells 803 and 804 is indicated. The operations illustrated in FIG. 6 differ from the operations described in FIG. 6 in that the UE receives common configuration and dedicated configuration information for additional cells 803 and 804 having different PCIs from the serving cell in operation 840. For example, since the UE needs to receive in advance all of the configurations for the corresponding cell applied after the handover, ServingCellID, candidateCellID (cell ID associated with the PCI), ServingCellConfigCommon, configuration information corresponding to ServingCellConfig, or configurations for a cell group (MAC, RLC, etc.) may be provided to the UE in advance. The corresponding configuration information may be provided in the form of a pre-configuration in the RRC configuration, and may include configuration information for a plurality of cells and cell groups. In addition, the corresponding configuration may include all pieces of configuration information (cell configurations, bearer configurations, security key, measurement configurations, etc.) applied when the UE moves (handovers) to the corresponding cell. The corresponding configuration may include configurations related to L1 measurement and reports and the unified TCI state configuration described in operation 456.

According to various embodiments of the disclosure, in FIG. 8, in addition to the RRC configuration information for the basic candidate target cells, configuration information related to performing uplink synchronization for the candidate target cells before handover may be included. According to various embodiments of the disclosure, terms such as pre-timing advance (TA), pre-RACH, or pre-random access may be used interchangeably. Further, the corresponding configuration may be configured with values disclosed below. According to various embodiments of the disclosure, the term "pre-TA" is used, but the pre-TA may include pre-random access or an operation of matching uplink synchronization similar to pre-random access.
- Establishing multiple timing advance groups (TAGs) for candidate target cells (hereinafter, including additional TAGs (aTAGs)): Introducing a new concept of a primary timing advance group (pTAG) by applying the existing concept of a pTAG to multiple candidate target cells or a set of candidate target cells having the same TA. For example, one aTAG may be introduced for each DU and an index aTAG ID may be assigned (multiple candidate target cells are included within one aTAG). When N aTAGs are established, a UE and a base station may store and manage TAs for the corresponding N aTAGs.
- An indicator (pre-TA indicator) indicating whether or not to perform pre-TA on the candidate cells applied for each aTAG. According to an embodiment, an indicator indicating the corresponding pre-TA may be indicated for each of the candidate cells. This is because the pre-TA may be indicated differently for each of the cells according to the needs of the base station, even if they are within the same DU.
- A timer indicating the duration of TA maintenance after completion of Pre-TA (hereinafter, including aTAT-additional timing advance timer): a timer may be configured for each aTAG or candidate target cell.
- RACH-related configurations for candidate target cells for performing pre-TA: These may be configured like pre-TA indicators, and configurations for contention based random access (CBRA) and contention free random access (CFRA) may be provided.
- Basically, CBRA operation performs pre-TA for candidate target cells.
- When the base station includes CFRA configurations, pre-TA for candidate target cells is performed using CFRA.

Basically, the configurations described above may include both intra/inter-DU scenarios, and since in an intra-DU situation, the TAs of candidate target cells within one DU may coincide, one aTAG and aTAT may be configured. However, the configurations may be divided into different values and processed by the implementation of the base station. In an inter-DU situation, aTAG and aTAT may be configured and applied for each DU. Particularly, the pre-TA indicator and random access resources may be configured for only one or some cells among the multiple cells in the aTAG. This is because the TA is the same for all cells in the TAG, and thus performing the pre-TA operation for all cells increases complexity by accompanying unnecessary procedures with the UE and the base station. According to an embodiment, the pre-random access operation described above in pre-TA may include an operation of securing uplink synchronization, and may include at least the procedure of msg1 (random access preamble transmission) and msg2 (random access response (RAR) reception) in conventional random access. Additionally, the operation of msg3 and msg4 may also be included in the pre-TA procedure. In addition, signaling used for the pre-TA (specifically, the TA-related MAC CE and access-related MAC CE and ID may be partially changed to be distinguished from the pre-TA. An example of the change may include the use of a differentiated MAC CE having a LCID and changes in the structure of the MAC CE (e.g., consideration of an increased aTAG size, introduction of an ID for differentiation, etc.), and the like.

In operation 845, the UE may perform pre-TA operation (e.g., random access-like operation) on the candidate target cells (particularly, the cells for which the pre-TA operation is indicated), according to the pre-TA-related configurations. For example, the UE may transmit a random access preamble via the CBRA or CFRA resources established for the corresponding candidate target cells, and match uplink synchronization with respect to the corresponding cell by receiving a random access response (RAR) (here, the procedure of msg3 and msg4 may also be added in the corresponding operation). For example, the UE may obtain an uplink synchronization value for the corresponding cell.

In operation 850, the UE may store and manage the synchronization value for the aTAG to which the corresponding cell belongs, as a matched synchronization value. After the operation described above, the UE may start the aTAT timer for candidate target cells for which the uplink synchronization has been matched (based on the result of random access). According to an embodiment, the expiration time of the aTAT timer may be provided for each cell or for each aTAG group in operation 840.

In operation 855, the UE may perform L1 measurement associated with the neighboring cells 803 and 804 while maintaining the connection with the serving cell 802. The UE may report, to the serving cell 802, the measurement result performed according to a preconfigured L1 measurement report configuration method (operation 860). The L1 measurement report 860 may be performed after operation 840, and operation 860 may be performed concurrently with or after operation 845 and operation 855, but may also be performed before. For example, the operations of operation 845 to operation 860 are operations by the base station configuration in operation 840 and, unlike the order shown in FIG. 8, may be performed concurrently or in priority to other operations.

In operations 865 and 870, the serving cell 802 may perform a procedure for identifying the pre-configuration for L1/L2 handover with the neighboring cells 803 and 804. Operations 865 and 870 may be omitted and may be included in any operation of the various embodiments of the disclosure, depending on the implementation of the base station as well as the operation of FIG. 8.

The serving cell 802 may determine a cell change (handover) of the UE, based on the received measurement result. In operation 875, the serving cell may indicate the handover simultaneously with the TCI state change of the UE to the target cell (TRP 2-cell 2) 803 through L1/L2 signaling. The L1/L2 signaling in operation 875 may include a MAC CE or DCI, and may include at least one of information indicating a change to a specific beam of TRP 2-Cell 2 and handover (indicated through an LCID or a field in a MAC CE), information on whether to perform random access (Pre-TA), or information on whether to perform an L2 reset (RLC/PDCP reestablishment) operation. For example, when multiple TCI states are activated, a MAC CE may be used, and one of the activated TCI states may be indicated based on DCI. According to an embodiment, only one TCI state may be indicated by the MAC CE. In this case, the DCI may be omitted.

In operation 880, the UE may perform handover based on the information included in the L1/L2 signaling received in operation 875. The UE may change the beam to the indicated beam, and perform data transmission/reception through the corresponding beam. In this case, when the aTAT timer of the UE for the target cell (TRP 2-Cell) 803 is running but has not expired, and an indicator indicating whether random access is performed (pre-TA) is inactive in the L1/L2 signaling, the UE may omit a random access operation when performing handover to the corresponding target cell and apply the uplink synchronization stored in the corresponding target cell.

According to an embodiment, in operation 885, the base station may indicate the handover to the target cell (TRP M-Cell N) 804 via L1/L2 signaling, simultaneously with a change in the TCI state of the UE. The L1/L2 signaling in operation 885 may include a MAC CE or DCI, and may include at least one of the following: information indicating the change and handover to a specific beam of TRP M-Cell N (indicated through an LCID or a field in a MAC CE), information about whether to perform random access (pre-TA), or information about whether to perform an L2 reset (MAC reset, RLC/PDCP reestablishment) operation. For example, when multiple TCI states are activated, a MAC CE may be used, and one of the activated TCI states may be indicated based on DCI. According to an embodiment, only one TCI state may be indicated in the MAC CE. In this case, the DCI may be omitted. In operation 890, the UE may perform handover based on the information included in the L1/L2 signaling received in operation 885, and may change the beam to the indicated beam and perform data transmission/reception through the corresponding beam. In operation 890, when the aTAT timer of the UE for the target cell (TRP M-Cell N) 804 has expired or an indicator indicating whether random access is performed (pre-TA) is active in the L1/L2 signaling, the UE may perform a random access operation when performing the handover to the target cell.

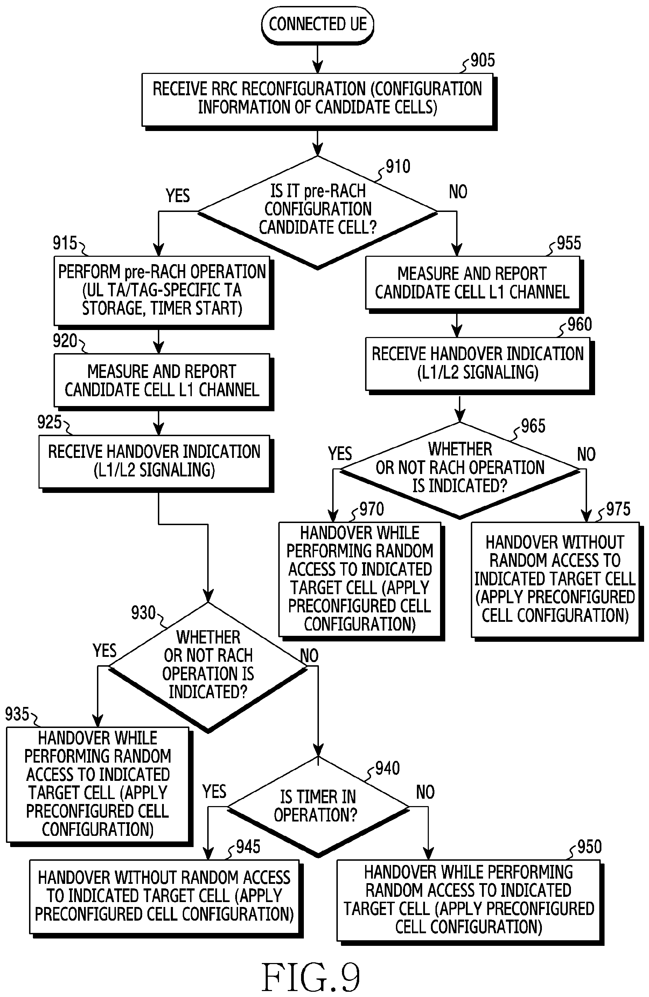

FIG. 9 illustrates an operation flow for matching uplink synchronization before receiving a handover indication by a UE according to various embodiments of the disclosure.

In operation 905, the UE in an RRC connected state may, based on an RRC reconfiguration message received from a serving cell, receive common/dedicate configuration information for neighboring cells to be applied after the L1/L2 based handover is indicated. Specific configuration methods are described with reference to FIGS. 4, 7, and 8.

In operation 910, the UE that has received the corresponding configuration may identify whether there is a candidate cell for which a pre-TA (pre-RACH) operation is configured.

In operation 915, when a relevant cell exists, the UE may perform a pre-RACH operation for the relevant cell. For example, the UE may transmit a random access preamble via the CBRA or CFRA resources established for the corresponding candidate target cells, and receive the RAR to match uplink synchronization for the corresponding cell (the procedure of msg3 and msg4 may also be added in this operation). For example, the UE may obtain an uplink synchronization value for the corresponding cell. The UE may store and manage the synchronization value for the aTAG to which the corresponding cell belongs, as a matched synchronization value. After the corresponding operation, the UE may start the aTAT timer for candidate target cells for which uplink synchronization has been matched (as a result of random access). According to an embodiment, the expiration time of the aTAT timer may be provided for each cell or for each aTAG group preconfigured by the base station.

In operation 920, the UE may perform the L1 measurement associated with the candidate neighboring cell while maintaining a connection state with the serving cell. The UE may report the results of the measurement to the serving cell according to a preconfigured L1 measurement reporting configuration method. The order of operations 915 and 920 described above may be the same or may change. The serving cell may determine whether to change the beam of the UE and perform handover, based on the received measurement result.

In operation 925, the serving cell may indicate a cell change and a beam change via L1/L2 signaling when it is determined that a change from a specific beam of the serving cell to a specific beam of a neighboring cell is required. For example, the UE may receive a handover indication via L1/L2 signaling in operation 925. The L1/L2 signaling may be a MAC CE, which may include both information indicating a specific beam of a neighboring cell and information indicating a serving cell change.

In operation 930, the UE may identify whether a handover is indicated from the MAC CE signaling received in operation 925, and may operate differently thereafter.

According to an embodiment, when the L1/L2 signaling (e.g., MAC CE) in operation 930 includes an indicator indicating whether random access is performed, the UE may perform handover to the indicated target cell while performing a random access operation. In addition, when performing handover to the corresponding target cell, the UE may apply a configuration for the corresponding cell that has been preconfigured by the base station. According to an embodiment, when the L1/L2 signaling (e.g., MAC CE) in operation 930 does not include an indicator indicating whether random access is performed, the UE may operate differently depending on whether the aTAT timer for the target cell is currently running, e.g., whether the timer has expired (operation 940).

According to an embodiment, when the aTAT timer for the corresponding cell is running (e.g., the timer has not expired) in operation 940, the UE may perform handover without random access to the target cell indicated by the L1/L2 signaling (e.g., MAC CE) and apply configurations for the preconfigured target cell in operation 945.

According to an embodiment, when the aTAT timer for the corresponding cell is not running (e.g., the timer has expired) in operation 940, the UE may perform a random access operation to the target cell indicated by the L1/L2 signaling (e.g., MAC CE), perform a handover, and apply configurations for the preconfigured target cell in operation 950.

According to an embodiment, when the UE identifies whether there is a candidate cell for which a pre-TA (pre-RACH) operation has been configured in operation 910, and if no relevant cell exists, the UE may perform L1 measurement associated with a candidate neighboring cell while maintaining a connection state with the serving cell and report the measurement result to the serving cell according to a preconfigured L1 measurement reporting configuration method in operation 955. The serving cell may, based on the received measurement result, determine whether the UE performs a beam change and handover, and when it is determined that a change from a specific beam of the serving cell to a specific beam of a neighboring cell is required, the serving cell may instruct the UE to perform cell change and beam change via L1/L2 signaling in operation 960. For example, the UE may receive a handover indication via L1/L2 signaling in operation 960. In this case, the L1/L2 signaling may include a MAC CE, and the corresponding MAC CE may include information indicating both a specific beam of a neighboring cell and a serving cell change.

In operation 965, the UE may identify whether the MAC signaling received in operation 925 indicates whether random access is to be performed, and may perform subsequent operations differently. According to an embodiment, when the L1/L2 signaling (e.g., MAC CE) in operation 965 includes an indicator indicating whether random access is to be performed, the UE may perform random access operation to the indicated target cell and perform handover. In addition, the UE may apply a configuration for a corresponding cell preconfigured from the base station when handing over to the corresponding target cell. According to an embodiment, when the L1/L2 signaling (e.g., MAC CE) in operation 965 does not include an indicator indicating whether random access is to be performed, the UE may perform the handover without random access to the indicated target cell and apply the configuration for the preconfigured target cell. In this case, the target cell to which the handover is performed matches the current serving cell in terms of uplink synchronization, and the target cell and the current serving cell may belong to the same DU. For example, the base station may indicate the corresponding operation on the assumption that the target cell and the serving cell are synchronized, and in this case, the UE may apply the uplink synchronization from the serving cell as it is.

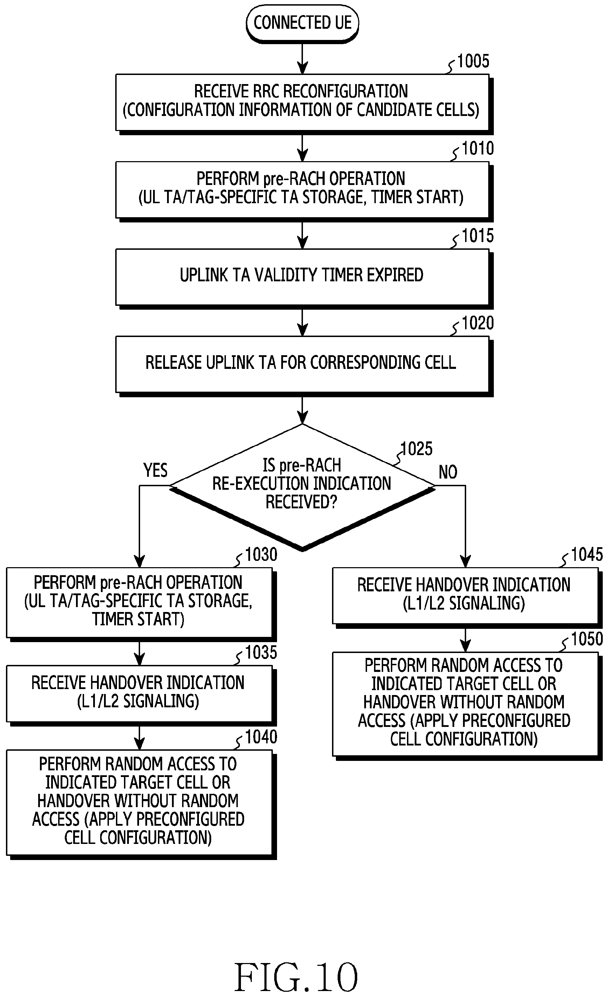

FIG. 10 illustrates an operational flow for operating an uplink synchronization timer for a candidate target cell by a UE according to various embodiments of the disclosure.

In operation 1005, the UE in an RRC connected state may, based on an RRC reconfiguration message received from a serving cell, receive common/dedicate configuration information for neighboring cells to be applied after the L1/L2 based handover is indicated. Specific configuration methods are described with reference to FIGS. 4, 7, and 8.

In operation 1010, the UE that has received the corresponding configuration may identify whether there is a candidate cell for which a pre-TA (pre-RACH) operation is configured, and when a relevant cell exists, the UE may perform a pre-RACH operation for the relevant cell. For example, the UE may transmit a random access preamble via the CBRA or CFRA resources established for the corresponding candidate target cells, and may receive the RAR to match uplink synchronization with respect to the corresponding cell (the procedure of msg3 and msg4 may also be added in this operation). For example, the UE may obtain an uplink synchronization value for the corresponding cell. The UE may store and manage the synchronization value for the aTAG to which the cell belongs, as a matched synchronization value. After the operation described above, the UE may start the aTAT timer for candidate target cells for which the uplink synchronization has been matched (based on the result of random access). According to an embodiment, the expiration time of the aTAT timer may be provided for each cell or each aTAG group preconfigured by the base station.

When an uplink TA validity timer (aTAT) operating on a specific cell and cell group (for each aTAG) expires in operation 1015, the UE may identify that the uplink synchronization for the corresponding cell and cell group (for each aTAG) is no longer valid in operation 1020, and may release the corresponding uplink synchronization. For example, the UE may delete (discard) the stored uplink synchronization (TA) value for each cell and each cell group (aTAG).

In operation 1025, the UE may receive a signal for indicating to perform the pre-RACH again from the base station. The corresponding signal may be newly transmitted as an RRC message, or may include information indicating to perform pre-RACH for a corresponding candidate target cell by introducing a new MAC CE (with new LCID) and a DCI message.

In operation 1030, the UE that has received the indication may re-perform the pre-RACH operation for the corresponding target cell. The relevant operation may be substantially the same or similar to operation 1010.

In operation 1035, the UE may receive an indication indicating whether to perform random access via L1/L2 signaling.

In operation 1040, the UE may identify whether the received MAC signaling indicates whether random access is to be performed, and may perform subsequent operations differently. According to an embodiment, when the L1/L2 signaling (e.g., MAC CE) includes an indicator indicating whether random access is to be performed, the UE may perform random access operation to the indicated target cell and perform handover. In addition, the UE may apply a configuration for a corresponding cell preconfigured from the base station when handing over to the corresponding target cell. According to an embodiment, when the L1/L2 signaling (e.g., MAC CE) does not include an indicator indicating whether random access is to be performed, the UE may perform the handover without random access to the indicated target cell and apply the configuration for the preconfigured target cell. In this case, the target cell to which the handover is performed match the current serving cell in terms of uplink synchronization, and the target cell and the current serving cell may belong to the same DU. For example, the base station may indicate the corresponding operation on the assumption that the target cell and the serving cell are synchronized, and in this case, the UE may apply the uplink synchronization from the serving cell as it is.

When the UE has not received a signal from the base station indicating pre-RACH again in operation 1025, the UE may receive an instruction to perform random access via L1/L2 signaling in operation 1045.

In operation 1050, the UE may identify whether the received MAC signaling indicates whether random access is to be performed, and may perform subsequent operations differently. When the L1/L2 signaling (e.g., MAC CE) includes an indicator indicating whether random access is to be performed, the UE may perform random access operation to the indicated target cell and perform handover. In addition, the UE may apply a configuration for a corresponding cell preconfigured from the base station when handing over to the corresponding target cell. According to an embodiment, when the L1/L2 signaling (e.g., MAC CE) does not include an indicator indicating whether random access is to be performed, the UE may perform the handover without random access to the indicated target cell and apply the configuration for the preconfigured target cell. In this case, the target cell to which the handover is performed matches the current serving cell in terms of uplink synchronization, and the target cell and the current serving cell may belong to the same DU. For example, the base station may indicate the corresponding operation on the assumption that the target cell and the serving cell are synchronized, and in this case, the UE may apply the uplink synchronization from the serving cell as it is.

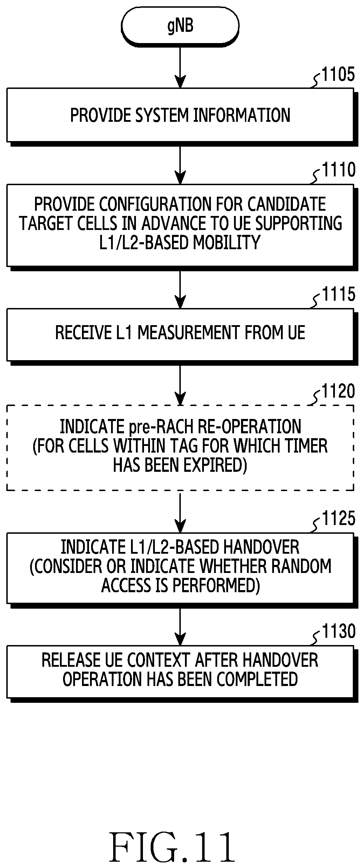

FIG. 11 illustrates an operational flow for performing uplink synchronization by a base station according to various embodiments of the disclosure.

In operation 1105, the base station may provide system information to a UE.

In operation 1110, the base station may transfer, to the UE in an RRC connected state, common/dedicate configuration information for neighboring cells to be applied after the L1/L2-based handover is indicated via an RRC reconfiguration message from the serving cell. Specific configuration methods are described with reference to FIGS. 4, 7, and 8. According to various embodiments of the disclosure, configuration information for cells for which L1/L2 handover is applied to the corresponding configuration may include pre-TA related configurations and indications to pre-perform uplink synchronization for candidate cells.

In operation 1115, the base station receives an L1 measurement value from the UE, and in this case, the measurement value may be a non-serving cell that supports L1/L2-based mobility (handover). The serving cell may determine whether to change the beam of the UE based on the received measurement result.

In operation 1125, when it is determined that a change from a specific beam of a serving cell to a specific beam of a neighboring cell is required, the base station (e.g., the serving cell) may indicate a cell change and a beam change of the UE via L1/L2 signaling. The L1/L2 signaling described above may include a MAC CE or DCI, and may include information indicating the change to a specific beam of a neighboring cell. In addition, the base station may also simultaneously indicate via L1/L2 signaling in the corresponding operation whether to perform random access to the cell in which the handover occurs and whether to perform an L2 reset (MAC reset, RLC/PDCP reestablishment). When a handover is indicated, the serving cell performs the handover procedure and may delete the UE context and release the connection when the handover to the target cell is complete. The measurement value relating to whether a handover is determined may include L1 measurement.

According to an embodiment, in operation 1120, the base station may transfer a signal indicating an uplink synchronization between the UE and the candidate target cell. The corresponding signal may be newly transferred as an RRC message, and may include information indicating to perform pre-RACH for a corresponding candidate target cell by introducing a new MAC CE (with new LCID) and a DCI message. Upon receiving the indication, the UE may re-perform the pre-RACH operation for the corresponding target cell described in operation 1030.

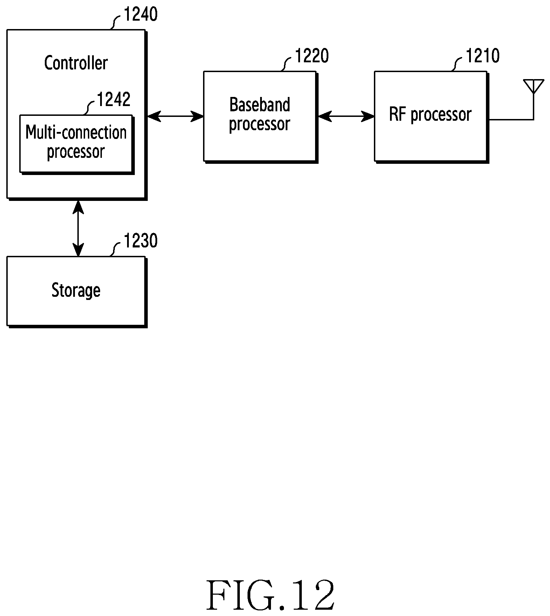

FIG. 12 illustrates a functional structure of a UE according to various embodiments of the disclosure.

Referring to FIG. 12, the UE may include a radio frequency (RF) processor 1210, a baseband processor 1220, a storage 1230, and a controller 1240.

The RF processor 1210 may perform a function for transmitting and receiving a signal via a wireless channel, such as band conversion and amplification of the signal. That is, the RF processor 1210 may up-convert a baseband signal provided from the baseband processor 1220 to an RF band signal, may transmit the same through an antenna, and may down-convert an RF band signal received through the antenna to a baseband signal. For example, the RF processor 1210 may include a transmission filter, a reception filter, an amplifier, a mixer, an oscillator, a digital-to-analog converter (DAC), an analog-to-digital converter (ADC), and the like. Although only one antenna is illustrated in FIG. 12, the UE may include multiple antennas. In addition, the RF processor 1210 may include multiple RF chains. Furthermore, the RF processor 1210 may perform beamforming. For the beamforming, the RF processor 1210 may adjust the phase and magnitude of each of signals transmitted and received through multiple antennas or antenna elements. In addition, the RF processor may perform MIMO, and may receive multiple layers when performing a MIMO operation.

The baseband processor 1220 may perform functions of conversion between baseband signals and bitstrings according to the system's physical layer specifications. For example, during data transmission, the baseband processor 1220 may encode and modulate a transmitted bitstring to generate complex symbols. In addition, during data reception, the baseband processor 1220 may demodulate and decode a baseband signal provided from the RF processor 1210 to restore a received bitstring. For example, when following the orthogonal frequency division multiplexing (OFDM) scheme, during data transmission, the baseband processor 1220 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 1220 may split a baseband signal provided from the RF processor 1210 at the OFDM symbol level, may restore signals mapped to subcarriers through a fast Fourier transform (FFT) operation, and may restore a received bitstring through demodulation and decoding.

The baseband processor 1220 and the RF processor 1210 may transmit and receive signals as described above. Therefore, the baseband processor 1220 and the RF processor 1210 may be referred to as a transmitter, a receiver, a transceiver, or a communication unit. Furthermore, at least one of the baseband processor 1220 and the RF processor 1210 may include multiple communication modules to support multiple different radio access technologies. In addition, at least one of the baseband processor 1220 and the RF processor 1210 may include different communication modules to process signals in different frequency bands. For example, the different radio access technologies may include wireless LANs (for example, IEEE 802.11), cellular networks (for example, LTE), and the like. In addition, the different frequency bands may include super high frequency (SHF) (e.g., 2 NRHz) bands and millimeter wave (mmWave) (e.g., 60GHz) bands.

The storage 1230 stores data such as basic programs, application programs, and configuration information for operations of the UE. In particular, the storage 1230 may store information related to the second access node, which performs wireless communication using the second wireless access technology. In addition, the storage 1230 provides the stored data at the request of the controller 1240.

The controller 1240 controls the overall operation of the UE. For example, the controller 1240 may transmit/receive signals through the baseband processor 1220 and the RF processor 1210. In addition, the controller 1240 records data in the storage 1230 and reads the data from the storage 1230. To this end, the controller 1240 may include at least one processor. For example, the controller 1240 may include a communication processor (CP) configured to perform control for communication, and an application processor (AP) configured to control upper layers such as application programs.

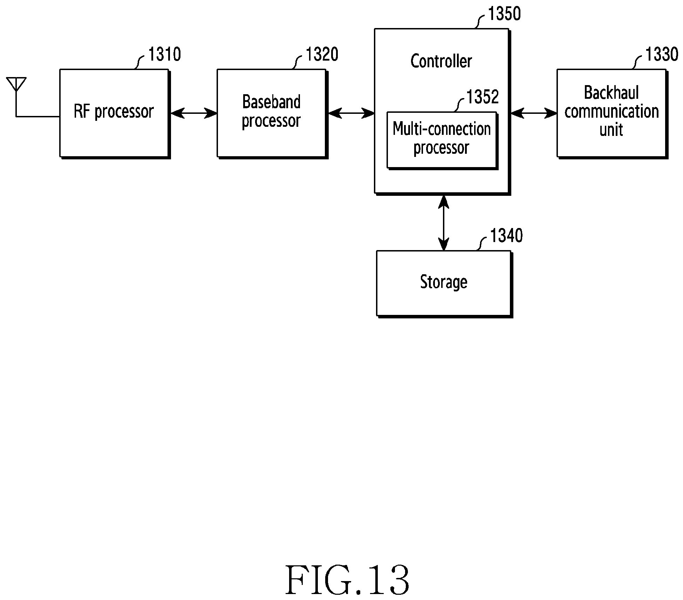

FIG. 13 illustrates a functional structure of a base station according to various embodiments of the disclosure.

Referring to FIG. 13, the base station may include an RF processor 1310, a baseband processor 1320, a backhaul communication unit 1330, a storage 1340, and a controller 1350.

The RF processor 1310 may perform a function for transmitting and receiving a signal via a wireless channel, such as band conversion and amplification of the signal. That is, the RF processor 1310 may up-convert a baseband signal provided from the baseband processor 1320 to an RF band signal, may transmit the same through an antenna, and may down-convert an RF band signal received through the antenna to a baseband signal. For example, the RF processor 1310 may include a transmission filter, a reception filter, an amplifier, a mixer, an oscillator, a DAC, and an ADC. Referring to FIG. 13, although only one antenna is illustrated, the first access node may include multiple antennas. In addition, the RF processor 1310 may include multiple RF chains. Furthermore, the RF processor 1310 may perform beamforming. For the beamforming, the RF processor 1310 may adjust the phase and magnitude of each of signals transmitted and received through multiple antennas or antenna elements. The RF processor may perform down-MIMO operations by transmitting one or more layers.

The baseband processor 1320 may perform functions of conversion between baseband signals and bitstrings according to the physical layer specifications of a first radio access technology. For example, during data transmission, the baseband processor 1320 may encode and modulate a transmitted bitstring to generate complex symbols. In addition, during data reception, the baseband processor 1320 may demodulate and decode a baseband signal provided from the RF processor 1310 to restore a received bitstring. For example, when following the OFDM scheme, during data transmission, the baseband processor 1320 may encode and modulate a transmitted bitstring to generate complex symbols, may map the complex symbols to subcarriers, and may configure OFDM symbols through an IFFT operation and CP insertion. In addition, during data reception, the baseband processor 1320 may split a baseband signal provided from the RF processor 1310 at the OFDM symbol level, may restore signals mapped to subcarriers through FFT operation, and may restore a received bitstring through demodulation and decoding. The baseband processor 1320 and the RF processor 1310 may transmit and receive signals as described above. Therefore, the baseband processor 1320 and the RF processor 1310 may be referred to as a transmitter, a receiver, a transceiver, a communication unit, or a wireless communication unit.

The backhaul communication unit 1330 may provide an interface for communicating with other nodes in the network. That is, the backhaul communication unit 1330 converts bitstrings transmitted from the main base station to other nodes, for example, an auxiliary base station, a core network, etc., into physical signals, and converts physical signals received from the other nodes into bitstrings.

The storage 1340 may store data such as basic programs for operation of the main base station, application programs, and configuration information. In particular, the storage 1340 may store information on bearers allocated to the connected UE, measurement results reported from the connected UE, and the like. In addition, the storage 1340 may store information serving as a criterion for determining whether to provide or stop multiple connections to the UE. In addition, the storage 1340 provides stored data at the request of the controller 230.

The controller 1350 controls the overall operation of the main base station. For example, the controller 1350 may transmit/receive signals through the baseband processor 1320 and the RF processor 1310 or through the backhaul communication unit 1330. In addition, the controller 1350 records data in the storage 1340 and reads the data from the storage 1340. To this end, the controller 1350 may include at least one processor.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A user equipment (UE) in a wireless communication system, the UE comprising:
a transceiver; and
a controller coupled with the transceiver, and configured to:
receive, from a first base station associated with a first cell via a radio resource control (RRC) signaling, first information configuring at least one candidate cell and second information configuring a contention free random access (CFRA) resource,
receive, from the first base station, information indicating to obtain a timing advance (TA),
transmit, to a second base station associated with a second cell among the at least one candidate cell, a random access preamble on the CFRA resource, based on the information, and
receive, from the first base station, a medium access control (MAC) control element (CE) including information associated with a TA of the second cell and information indicating a cell switching from the first cell to the second cell.

2. The UE of claim 1,
wherein the first information or the second information is configured for each of the at least one candidate cell.

3. The UE of claim 1,
wherein the MAC CE is for triggering the cell switching without performing a random access.

4. The UE of claim 1,
wherein the first information is for the cell switching.

5. A base station associated with a first cell in a wireless communication system, the base station comprising:
a transceiver; and
a controller coupled with the transceiver, and configured to:
transmit, to a user equipment (UE) via a radio resource control (RRC) signaling, first information configuring at least one candidate cell and second information configuring a contention free random access (CFRA) resource,
transmit, to the UE, information indicating to obtain a timing advance (TA), and transmit, to the UE, a medium access control (MAC) control element (CE) including information associated with a TA of the second cell and information indicating a cell switching from the first cell to the second cell, based on a random access preamble on the CFRA resource.

6. The base station of claim 6,
wherein the first information or the second information is configured for each of the at least one candidate cell.

7. The base station of claim 6,
wherein the MAC CE is for triggering the cell switching without performing a random access.

8. The base station of claim 6,
wherein the first information is for the cell switching.

9. A method performed by a user equipment (UE) in a wireless communication system, the method comprising:
receiving, from a first base station associated with a first cell via a radio resource control (RRC) signaling, first information configuring at least one candidate cell and second information configuring a contention free random access (CFRA) resource;
receiving, from the first base station, information indicating to obtain a timing advance (TA);
transmitting, to a second base station associated with a second cell among the at least one candidate cell, a random access preamble on the CFRA resource, based on the information; and
receiving, from the first base station, a medium access control (MAC) control element (CE) including information associated with a TA of the second cell and information indicating a cell switching from the first cell to the second cell.

10. The method of claim 9,
wherein the first information or the second information is configured for each of the at least one candidate cell.

11. The method of claim 9,
wherein the MAC CE is for triggering the cell switching without performing a random access.

12. The method of claim 9,
wherein the first information is for the cell switching.

13. A method performed by a base station associated with a first cell in a wireless communication system, the method comprising:
transmitting, to a user equipment (UE) via a radio resource control (RRC) signaling, first information configuring at least one candidate cell and second information configuring a contention free random access (CFRA) resource;
transmitting, to the UE, information indicating to obtain a timing advance (TA); and
transmitting, to the UE, a medium access control (MAC) control element (CE) including information associated with a TA of the second cell and information indicating a cell switching from the first cell to the second cell, based on a random access preamble on the CFRA resource.

14. The method of claim 13,
wherein the first information or the second information is configured for each of the at least one candidate cell.

15. The method of claim 13,
wherein the MAC CE is for triggering the cell switching without performing a random access.
